# EUROPÄISCHE PATENTSCHRIFT

(11) **EP 0 386 664 B1**
(45) Veröffentlichungstag und Bekanntmachung des Hinweises auf die Patenterteilung: **09.02.1994**
(21) Anmeldenummer: 90104161.6
(22) Anmeldetag: 03.03.1990
(51) Int. Cl.: G11B 33/04, G11B 25/04

(54) **Datenkartenaufnahme**
Housing for cards of data
Réception de cartes de données

(30) Priorität: 09.03.1989 DE 8902863 U
(43) Veröffentlichungstag der Anmeldung: 12.09.1990
(73) Patentinhaber: Mannesmann Kienzle GmbH (HR B1220), 78052 Villingen-Schwenningen (DE)
(72) Erfinder: Hug, Klaus, D-7238 Oberndorf (DE); Modest, Otmar, D-7732 Niedereschach (DE); Götz, Jürgen, D-7730 Villingen-Schwenningen (DE)

(56) Entgegenhaltungen:
- EP-A- 0 292 720
- DE-A- 2 166 405
- DE-A- 3 445 185

## Beschreibung

Die Erfindung betrifft eine Datenkartenaufnahme mit einem im wesentlichen quaderförmigen Gehäuse, mit einem Ein-/Ausgabeschlitz und einem diesem zugeordneten Führungsschacht für die Datenkarten, mit Mitteln zum Ein-/Auslesen der Daten von Datenkarten und mit Mitteln zum Ver- und Entriegeln der Datenkarten derart, daß ein beweglicher Anschlag vorgesehen ist, mit welchem die in bezug auf die Datenkartenaufnahme nach innen weisende Stirnseite einer eingegebenen Datenkarte zusammenwirkt, daß wenigstens ein Riegel vorgesehen ist, welcher mit dem beweglichen Anschlag in getrieblicher Verbindung steht, daß der getrieblichen Verbindung ein Gesperre zugeordnet ist und daß in der Endstellung der Datenkarte in der Datenkartenaufnahme die nach außen weisende Stirnseite der Datenkarte von dem Riegel umgriffen ist.

Datenkarten gewinnen aufgrund eines heute relativ hohen Speichervermögens sowie einer zufriedenstellenden Datensicherheit als mobiler Datenträger zunehmend Bedeutung, und zwar für eine Vielzahl von Anwendungen.

Mit der zunehmenden Bedeutung der Datenkarten als Informationsträger, den zunehmenden Funktionen und Wertinhalten der Datenkarten nehmen aber auch die Anforderungen an die Mittel zu, die den Datenkarten in ihrer Schreib und Leseposition innerhalb eines Gerätes als Aufnahme dienen.

So ist insbesondere bei Chip-Datenkarten wegen der Vielzahl der abzustastenden, eng beieinander liegenden Kontakte eine genaue Lagefixierung der Datenkarten durch geeignete Führungen und eine entsprechend genaue Ausbildung und Anordnung des abtastenden Kontaktsatzes erforderlich. Um diesen Forderungen gerecht zu werden, ist es bekannt, spezielle Transportschlitten für die Datenkarten zu verwenden. Einige Anwendungsfälle machen zusätzlich Verriegelungseinrichtungen und Zugriffssicherungsmittel nötig, d. h. die betreffenden Datenkartenaufnahmen, die für den Benutzer in der Regel nur als Schlitz an einer Gerätefrontfläche, in den die Datenkarten einzugeben sind, in Erscheinung treten, entwickeln sich zu relativ aufwendigen Aufnahmeaggregaten.

Ein Beispiel hierfür ist das Gebiet der Datenerfassung in Kraftfahrzeugen. Wegen des dokumentarischen Wertes der Aufzeichnungen und der erforderlichen Manipulationssicherheit sind die Anforderungen an die für Fahrzeuggeräte vorgesehenen Datenkartenaufnahmen hoch und somit auch der Raumbedarf erheblich. Auf der anderen Seite müssen die betreffenden Geräte zur Fahrtdaten- und Arbeitszeiterfassung oder Fahrpreisermittlung aufgrund ihrer Zuordnung zum haptischen Bereich der Fahrer den beschränkten Raumverhältnissen der Armaturenbretter von Kraftfahrzeugen durch entsprechende Kompaktheit gerecht werden und die auf dem Fahrzeuggerätesektor geltenden Bedingungen der Großserienfertigung erfüllen.

Die aus dem Kreditkartenbetrieb bei Bankschaltern, Park-und Tankautomaten bekannten Datenkartenaufnahmen können diesen Ansprüchen nicht oder nur bedingt gerecht werden, insbesondere sind bei bekannten Datenkartenaufnahmen die Mittel zum Ver- und Entriegeln der Datenkarten außergewöhnlich aufwendig hinsichtlich Fertigung und Montage. Ferner neigen sie aufgrund ihrer Teilevielfalt und hoher Anzahl an Lagerstellen zu Funktionsstörungen, sie sind wartungsanfällig und erfordern relativ viel Raum innerhalb der Gehäusekonturen der Datenkartenaufnahme, so daß, je nach Anwendungsfall, entweder nicht alle für die Kommunikation mit der Datenkarte erforderlichen elektronischen Bauteile der Datenkartenaufnahme zugeordnet werden können, oder eine relativ große Bauhöhe in Kauf genommen werden muß. Dementsprechend sind, vom Aufwand abgesehen, derartige Datenkartenaufnahmen nicht universell einsetzbar.

Somit bestand die Aufgabe, für eine Datenkartenaufnahme eine Ver- und Entriegelungseinrichtung zu schaffen, welche innerhalb gegebener Gehäuseabmessungen ein Maximum an Freiraum bietet, eine gute Serienfertigungsfähigkeit aufweist und sich durch eine hohe Funktionssicherheit auszeichnet.

Die Lösung dieser Aufgabe ist ausgehend vom eingangs geschilderten Stand der Technik dadurch gekennzeichnet, daß ein Schieber vorgesehen ist, an welchem einerseits der Anschlag für die nach innen weisende Stirnseite der Datenkarte, andererseits eine Verzahnung ausgebildet sind und daß der Riegel drehbar gelagert ist und mittels eines ihm zugeordneten Zahnsegmentes mit der Verzahnung des Schiebers in Eingriff steht.

Eine vorteilhafte Weiterentwicklung ist darin zu sehen, daß eine zweite, zwischen den Seitenwänden des Gehäuses der Datenkartenaufnahme gelagerte Welle vorgesehen ist, welche eine den Schnittstellen der Datenkarte zugeordnete Koppeleinrichtung trägt und ebenfalls mittels eines Zahnsegmentes mit dem Schieber in getrieblicher Verbindung steht, wobei der Schieber ein im wesentlichen rechteckförmiges Profil aufweist und in einer Nut geführt ist, welche auf der Gegenseite einer den Führungsschacht bildenden Wand der Datenkartenaufnahme ausgebildet ist und der am Schieber ausgebildete Anschlag durch eine Freisparung in der Wand in den Führungsschacht eingreift.

Weitere vorteilhafte Ausbildungen der Erfindung ergeben sich aus den noch nicht zitierten Unteransprüchen.

Die Erfindung bietet den Vorteil, daß durch eine geringstmögliche Anzahl an Bauteilen und durch besonders einfache und robust ausgebildete sowie auf einfache Weise zu montierende Bauteile der Fertigungs- und Montageaufwand auf ein Minimum reduziert ist. D. h. es sind nicht nur eine gute Reproduzierbarkeit und trotz großer Fertigungstoleranzen eine zufriedenstellende Führungsgenauigkeit der Bauteile gegeben, sondern es sind auch die Voraussetzungen für eine maschinelle Montage geschaffen. Dadurch sind gleichzeitig, nicht zuletzt aufgrund der Vermeidung von Lagerstellen, die Forderungen hinsichtlich Wartungsfreiheit und Funktionssicherheit auch für den Fall wenig sorgfältiger Bedienung der Datenkartenaufnahme und unter den im Kraftfahrzeug herrschenden rauhen Betriebsbedingungen erfüllt. Die gefundene Lösung bietet ferner den angestrebten Freiraum innerhalb des Gehäuses der Datenkartenaufnahme und somit Platz für sämtliche für eine Austauschfähigkeit und universelle Verwendbarkeit der Datenkartenaufnahme erforderlichen elektronischen Bauteile.

Im folgenden sei die Erfindung anhand der beigefügten Zeichnungen näher erläutert. Es zeigen
FIGUR 1 eine perspektivische Darstellung der erfindungsgemäßen Datenkartenaufnahme,
FIGUR 2 eine Draufsicht der Datenkartenaufnahme mit aufgeschnittener Leiterplatte,
FIGUR 3 eine Schnittdarstellung der Datenkartenaufnahme gemäß der Schnittlinie A in FIGUR 2 ohne Datenkarte,
FIGUR 4 eine Schnittdarstellung der Datenkartenaufnahme gemäß der Schnittlinie A in FIGUR 2 mit einer im Führungsschacht verriegelten Datenkarte und
FIGUR 5 einen Teilschnitt der Datenkartenaufnahme gemäß der Schnittlinie B in FIGUR 2.

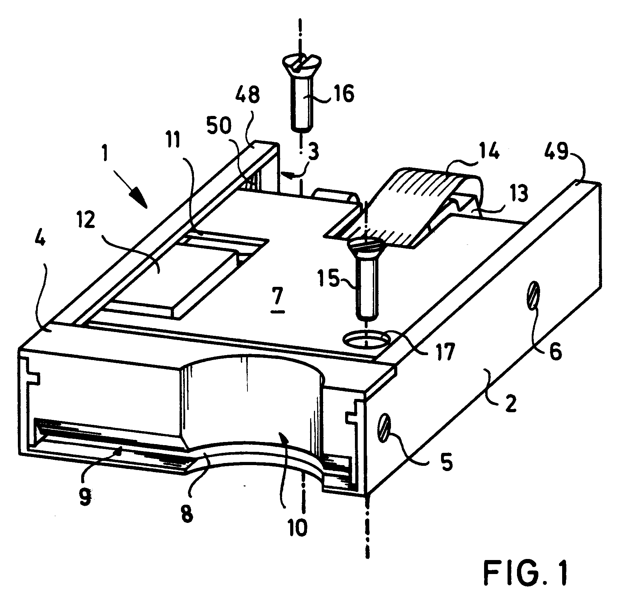

Das Gehäuse 1 der Datenkartenaufnahme besteht gemäß FIGUR 1 aus drei Bauteilen, einem U-förmigen Träger 2, einem Einschub 3 und einer Frontblende 4. Die drei Gehäusebauteile 2, 3 und 4 sind spritzgußtechnisch hergestellt und in geeigneter, nicht näher bezeichneter Weise, z. B. mittels Nut-Steg-Verbindungen oder gegenseitigem Umgreifen von Wandpartien und mittels Schrauben 5 und 6, von denen zwei in FIGUR 1 sichtbar sind, zusätzlich gesichert, wobei bei einer selbstsichernden Ausbildung der Fügeverbindungen auf die Verschraubungen auch verzichtet werden kann.

Aus der FIGUR 1 geht ferner hervor, daß das quaderförmige Gehäuse 1 an einer Seite von einer Leiterplatte 7 begrenzt ist, die wenigstens die elektronischen Elemente trägt, mit denen die für die Ein-/Ausgabe und das Ver- und Entriegeln der Datenkarten sowie das Kontaktieren erforderlichen Steuer-und Kontrollmaßnahmen durchführbar sind. Die rückwärtige Stirnseite ist offen. Die Frontblende 4 bildet zusammen mit einer Wand 8 des Trägers 2 einen in geeigneter Weise keilförmigen Ein-/Ausgabeschlitz 9. Deckungsgleich sind in der Wand 8 und in der Frontblende 4 Vertiefungen ausgeformt, die gemeinsam eine Griffaussparung 10 bilden.

Durch eine Aussparung 11 in der Leiterplatte 7 ist ein der Entriegelung einer eingegebenen Datenkarte dienender Elektromagnet 12 sichtbar. Mit 13 ist ein als Koppeleinrichtung dienender Kontaktsatz bezeichnet, der, was noch näher beschrieben wird, schwenkbar gelagert und über ein flexibles Leiterband 14 mit der Leiterplatte 7 verbunden ist. Die Außenverbindung der Datenkartenaufnahme und deren Energieversorgung erfolgt ebenfalls mit einem mit der Leiterplatte 7 verbindbaren Flachbandkabel, das jedoch nicht dargestellt ist. Zwei Schrauben 15 und 16, die mit der Wand 8 des Trägers 2 zusammenwirken, dienen - die Öffnung 17 in der Leiterplatte 7 ist lediglich für die Durchführung der Schraube 15 vorgesehen - dem Befestigen der Datenkartenaufnahme in dem Gerät, in dem sie verwendet wird.

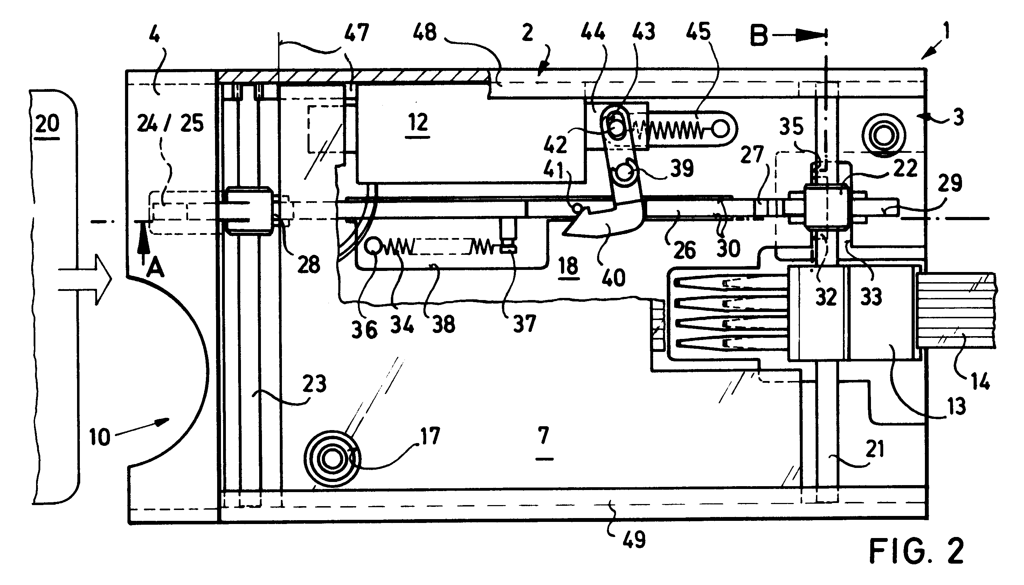

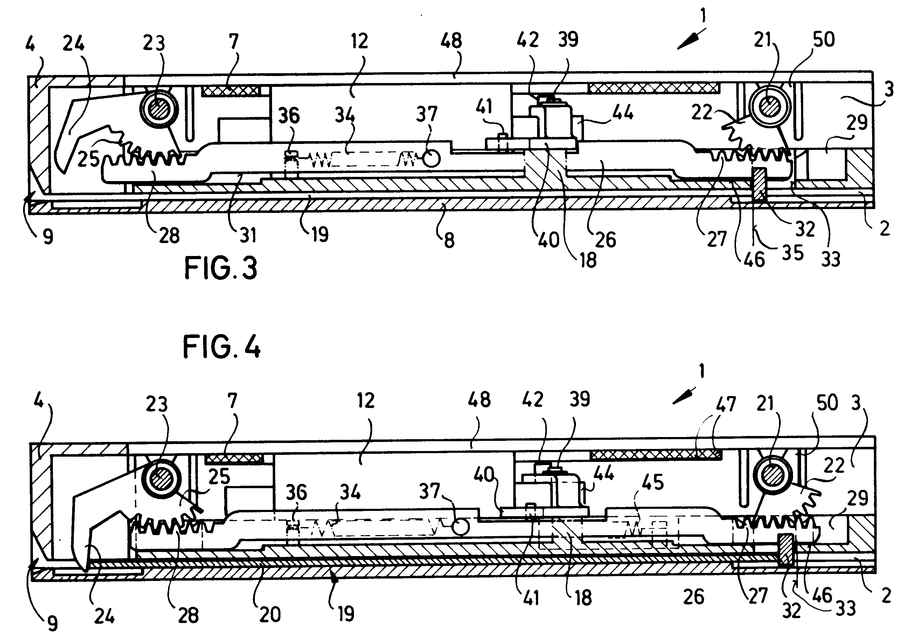

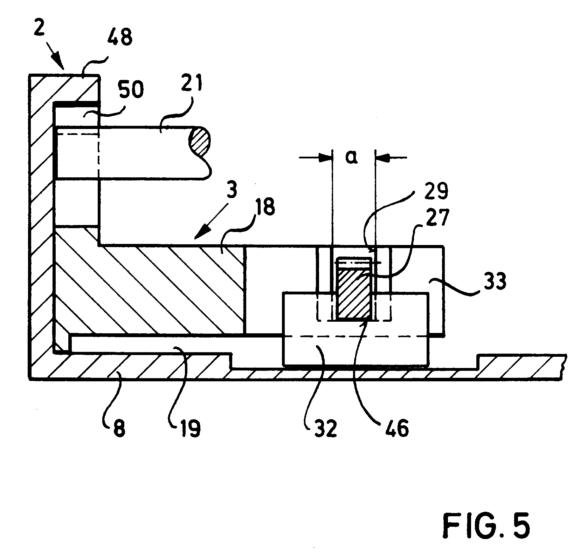

Die Draufsicht FIGUR 2 und die Schnittdarstellung FIGUR 3, die gemeinsam beschrieben werden sollen, zeigen,daß zwischen der Wand 8 des Trägers 2 und einer Wand 18 des Einschubes 3 ein dem Ein-/Ausgabeschlitz 9 nachgeordneter Führungsschacht 19 ausgebildet ist, welcher der Aufnahme einer Datenkarte 20 dient. Ferner ist ersichtlich, daß der Kontaktsatz 13 auf einer Welle 21 befestigt ist, die ein Zahnsegment 22 trägt und in in den Seitenwänden des Einschubes 3 ausgebildeten Schnapplagern - einer der Lagerarme ist mit 50 bezeichnet - gelagert ist. Eine in gleicher Weise gelagerte Welle 23 trägt einen Riegel 24, der zusammen mit einem Zahnsegment 25 ein Teil bildet. Die beiden Zahnsegmente 22 und 25 stehen über einen Schieber 26, an dem den Zahnsegmenten 22, 25 zugeordnete Verzahnungen 27 und 28 ausgebildet sind, in getrieblicher Verbindung. Der Schieber 26 weist ein im wesentlichen rechteckförmiges Profil auf und ist in einer Führungsnut 29 lose gelagert. Die Führungsnut 29 ihrerseits ist auf der dem Führungsschacht 19 entgegengesetzten Seite der Wand 18 ausgebildet und derart freigespart (30), daß der Schieber 26 nur an seinen äußeren Enden seitlich relativ eng (Maß a in FIGUR 5) geführt ist. Ebenso sitzt der Schieber 26 nur mit seinen äußeren Enden, wo er mit den Zahnsegmenten 22 und 25 in Eingriff steht und durch diese in der Führungsnut 29 gehalten wird, im Grunde (Lauffläche 46) der Führungsnut 29 auf. Der dazwischen liegende Bereich des Schiebers 26 ist freigespart (31), so daß der Schieber dort mit der Wand 18 keine Berührung hat.

An dem Schieber 26 ist ein Anschlag 32 angeformt, der durch eine Freisparung 33 in der Wand 18 in den Führungsschacht 19 eingreift und unter der Wirkung einer an dem Schieber 26 angreifenden Zugfeder 34 entweder an der Stirnseite einer eingegebenen Datenkarte 20, wie es die FIGUR 4 zeigt, oder an einer durch die Freisparung 33 gebildeten Stirnfläche 35 der Wand 18 anliegt. Die Zugfeder 34 sowie deren Aufhängung, die Pföstchen 36 und 37, sind innerhalb einer in der Wand 18 vorgesehenen Vertiefung 38 versenkt angeordnet. Die Zugfeder 34 ist Teil eines dem Schieber 26 zugeordneten Gesperres, dessen auf einer Achse 39 drehbar gelagerte Sperrklinke 40 einerseits mit einem an dem Schieber 26 befestigten Zapfen 41 zusammenwirkt, andererseits über eine Stift-Schlitz-Verbindung 42, 43 mit dem Anker 44 des Elektromagneten 12 gekuppelt ist und unter der Wirkung einer Zugfeder 45 steht.

Der Vollständigkeit halber sei noch erwähnt, daß die Leiterplatte 7 dadurch im Gehäuse 1 der Datenkartenaufnahme festgehalten ist, daß in den Seitenwänden des Einschubes 3 Freisparungen 47 ausgebildet sind und an den Seitenwänden des Trägers 2 wenigstens teilweise nach innen weisende Stege 48, 49 angeformt sind, die die Leterplatte 7 und die Seitenwände des Einschubes 3 über- bzw. umgreifen. Auf die gleiche Weise wird auch der in eine geeignete Freisparung und Vertiefung im Einschub 3 eingelassene Elektromagnet 12 festgehalten, d. h. Fügeverbindungen sind nicht nur für die Gehäusebauteile 2, 3 und 4 vorgesehen sondern auch für Funktionsteile der Datenkartenaufnahme, so daß eine optimale Raumnutzung und durch Vermeidung von Befestigungs- und Sicherungselementen eine weitgehende Minimierung des Bauteile- und Montageaufwandes gegeben ist.

Die Funktion der erfindungs gemäßen Einrichtung ist folgende:
Wird eine Datenkarte 20 im Führungsschacht 19 so weit eingesteckt, daß ihre nach innen weisende Stirnseite am Anschlag 32 anliegt, so wird beim weiteren Einschieben der Datenkarte 20 gleichzeitig auch der Schieber 26 entgegen der Wirkung der Zugfeder 34 verschoben und zwangsläufig die mit dem Schieber 26 in getrieblicher Verbindung stehenden Elemente betätigt, d. h. die Wellen 21 und 23 verschwenkt und somit der Kontaktsatz 13 abgesenkt und der Riegel 24 vor die nach außen weisende Stirnseite der Datenkarte 20 geschwenkt. Als Überhubsicherung dient die dem Anschlag 32 zugeordnete Stirnfläche 35 der Freisparung 33. Bevor diese Stellung erreicht ist, wird, indem die Klinke 40 an dem Zapfen 41 einrastet, das Gesperre wirksam, das mittels des Elektromagneten 12 wieder entriegelbar ist. Dabei kommt dem gefedert gelagerten Schieber 26 in bezug auf die Datenkarte 20 zusätzlich eine Auswerferfunktion zu.

## Patentansprüche

1. Datenkartenaufnahme mit einem im wesentlichen quaderförmigen Gehäuse (1), mit einem Ein-/Ausgabeschlitz (9) und einem diesem zugeordneten Führungsschacht (19) für die Datenkarten (20), mit Mitteln zum Ein-/Auslesen der Daten von Datenkarten und mit Mitteln zum Ver- und Entriegeln der Datenkarten derart, daß ein beweglicher Anschlag (32) vorgesehen ist, mit welchem die in bezug auf die Datenkartenaufnahme nach innen weisende Stirnseite einer eingegebenen Datenkarte zusammenwirkt, daß wenigstens ein Riegel (24) vorgesehen ist, welcher mit dem beweglichen Anschlag (32) in getrieblicher Verbindung steht, daß der getrieblichen Verbindung ein Gesperre (34, 39, 40, 41, 45) zugeordnet ist und daß in der Endstellung der Datenkarte (20) in der Datenkartenaufnahme die nach außen weisende Stirnseite der Datenkarte (20) von dem Riegel (24) umgriffen ist,
dadurch gekennzeichnet,
daß ein Schieber (26) vorgesehen ist, an welchem einerseits der Anschlag (32) für die nach innen weisende Stirnseite der Datenkarte (20), andererseits eine Verzahnung (28) ausgebildet sind und daß der Riegel (24) drehbar gelagert ist und mittels eines ihm zugeordneten Zahnsegmentes (25) mit der Verzahnung (28) des Schiebers (26) in Eingriff steht.

2. Datenkartenaufnahme nach Anspruch 1,
dadurch gekennzeichnet,
daß ein mit dem Zahnsegment (25) einstückig ausgebildeter Riegel (24) auf einer quer zur Bewegungsrichtung der Datenkarte (20) angeordneten und in Seitenwänden des Gehäuses (1) der Datenkartenaufnahme gelagerten Welle (23) befestigt ist.

3. Datenkartenaufnahme nach Anspruch 1,
dadurch gekennzeichnet,
daß der Schieber (26) in wenigstens einer in dem Gehäuse (1) der Datenkartenaufnahme ausgebildeten Kulisse lose geführt ist.

4. Datenkartenaufnahme nach Anspruch 1,
dadurch gekennzeichnet,
daß der Schieber (26) ein im wesentlichen rechteckförmiges Profil aufweist und in einer Nut (29) geführt ist, welche auf der Gegenseite einer den Führungsschacht (19) bildenden Wand (18) der Datenkartenaufnahme ausgebildet ist und daß der am Schieber (26) ausgebildete Anschlag (32) durch eine Freisparung (33) in der Wand (18) in den Führungsschacht (19) eingreift.

5. Datenkartenaufnahme nach Anspruch 2,
dadurch gekennzeichnet,
daß eine zweite zwischen den Seitenwänden des Gehäuses (1) der Datenkartenaufnahme gelagerte Welle (21) vorgesehen ist, welche eine den Schnittstellen der Datenkarte (20) zugeordnete Koppeleinrichtung (Kontaktsatz 13) trägt und ebenfalls mittels eines Zahnsegmentes (22) mit dem Schieber (26) in getrieblicher Verbindung steht.

6. Datenkartenaufnahme nach Anspruch 1,
dadurch gekennzeichnet,
daß das Gesperre (34, 39, 40, 41, 45) dem Schieber (26) zugeordnet und elektromagnetisch (12, 42, 43, 44) entriegelbar ist.

7. Datenkartenaufnahme nach Anspruch 1,
dadurch gekennzeichnet,
daß dem Schieber (26) ein Gesperre zugeordnet ist, das durch ein von außerhalb der Datenkartenaufnahme betätigbares Schloß entriegelbar ist.

## Claims

1. Data card receiver having a substantially cuboidal housing (1), having an insertion/ejection slot (9) and associated therewith a guide passageway (19) for the data cards (20), having means for inputting/reading out the data from data cards and having means for locking and unlocking the data cards such that there is provided a movable stop (32) with which there cooperates the end side of an inserted data card which points inwards with respect to the data card receiver, that there is provided at least one bar (24) which is in geared connection with the movable stop (32), that a locking mechanism (34, 39, 40, 41, 45) is associated with the geared connection, and that in the end position of the data card (20) in the data card receiver the outwardly pointing end side of the data card (20) is gripped around by the bar (24), characterized in that there is provided a slide (26) on which there is constructed on the one hand the stop (32) for the inwardly pointing end side of the data card (20), and on the other hand there is constructed a toothing (28), and in that the bar (24) is rotatably mounted and engages with the toothing (28) of the slide (26) by means of a toothed segment (25) associated with the said bar.

2. Data card receiver according to Claim 1, characterized in that a bar (24) constructed in one piece with the toothed segment (25) is secured to a shaft (23) which is arranged transversely with respect to the direction of movement of the data card (20) and which is mounted in side walls of the housing (1) of the data card receiver.

3. Data card receiver according to Claim 1, characterized in that the slide (26) is loosely guided in at least one slide link constructed in the housing (1) of the data card receiver.

4. Data card receiver according to Claim 1, characterized in that the slide (26) has a substantially rectangular profile and is guided in a groove (29) which is constructed on the opposite side of a wall (18) of the data card receiver forming the guide passageway (19), and in that the stop (32) constructed on the slide (26) engages in the guide passageway (19) through a cutout (33) in the wall (18).

5. Data card receiver according to Claim 2, characterized in that there is provided a second shaft (21) which is mounted between the side walls of the housing (1) of the data card receiver and which bears a coupling device (contact assembly 13) associated with the interfaces of the data card (20) and which is also in geared connection with the slide (26) by means of a toothed segment (22).

6. Data card receiver according to Claim 1, characterized in that the locking mechanism (34, 39, 40, 41, 45) is associated with the slide (26) and can be unlocked electromagnetically (12, 42, 43, 44).

7. Data card receiver according to Claim 1, characterized in that there is associated with the slide (26) a locking mechanism which can be unlocked by a lock which can be actuated outside the data card receiver.

## Revendications

1. Dispositif de réception de cartes de données avec un boîtier (1), pour l'essentiel, parallélépipédique, avec une fente d'entrée/sortie (9) et un puits de guidage (19) associé à cette dernière pour les cartes de données (20), avec des moyens pour la mémorisation/extraction des données de cartes de données et avec des moyens pour le verrouillage et déverrouillage desdites cartes de données, de telle sorte qu'il est prévue une butée mobile (32) avec laquelle coopère la face frontale dirigée, par rapport au dispositif de réception de cartes de données, vers l'intérieur d'une carte de données introduite, qu'il est prévu au moins un verrou (24) qui coopère fonctionnellement avec ladite butée mobile (32), qu'à cet assemblage fonctionnel est associé un dispositif d'encliquetage (34, 39, 40, 41, 45) et que, dans la position de fin de course de la carte de données (20) dans le dispositif de réception de cartes de données, la face frontale dirigée vers l'extérieur de la carte de données (20) est emboîtée par le verrou (24),
caractérisé par le fait
qu'il est prévu un coulisseau (26) sur lequel est formée, d'une part, la butée (32) pour la face frontale dirigée vers l'intérieur de la carte de données (20) et, d'autre part, une denture (28) et que ledit verrou (24) est monté à rotation et engrène, au moyen d'un segment denté (25) qui lui est associé, avec ladite denture (28) dudit coulisseau (26).

2. Dispositif de réception de cartes de données selon la revendication 1,
caractérisé par le fait
qu'un verrou (24) réalisé avec le segment denté (25) en une seule pièce est fixé sur un arbre (23) disposé transversalement par rapport au sens de mouvement de la carte de données (20) et monté dans des parois latérales du boîtier (1) dudit dispositif de réception de cartes de données.

3. Dispositif de réception de cartes de données selon la revendication 1,
caractérisé par le fait
que le coulisseau (26) est guidé avec jeu dans au moins une coulisse formée dans le boîtier (1) dudit dispositif de réception de cartes de données.

4. Dispositif de réception de cartes de données selon la revendication 1,
caractérisé par le fait
que le coulisseau (26) présente un profil de forme, pour l'essentiel, rectangulaire et qu'il est guidé dans une rainure (29) qui est formée sur la face opposée d'une paroi (18) constituant le puits de guidage (19) dudit dispositif de réception de cartes de données et que la butée (32) formée sur ledit coulisseau (26) s'engage, à travers un évidement (33) ménagé dans la paroi (18), dans ledit puits de guidage (19).

5. Dispositif de réception de cartes de données selon la revendication 2,
caractérisé par le fait
qu'il est prévu un second arbre (21) monté entre les parois latérales du boîtier 1 du dispositif de réception de cartes de données qui porte un dispositif de couplage (banc de contacts 13) associé aux interfaces de la carte de données (20) et qui coopère aussi fonctionnellement, au moyen d'un segment denté (22), avec le coulisseau (26).

6. Dispositif de réception de cartes de données selon la revendication 1,
caractérisé par le fait
que le dispositif d'encliquetage (34, 39, 40, 41, 45) est associé au coulisseau (26) et peut être déverrouillé par des moyens électromagnétiques (12, 42, 43, 44).

7. Dispositif de réception de cartes de données selon la revendication 1,
caractérisé par le fait
qu'au coulisseau (26) est associé un dispositif d'encliquetage qui peut être déverrouillé par une serrure pouvant être actionnée de l'extérieur du dispositif de réception de cartes de données.
